Europäisches Patentamt

European Patent Office

Office européen des brevets

(11) Publication number: **0 238 693 B1**

# EUROPEAN PATENT SPECIFICATION

(45) Date of publication of patent specification: **21.08.91**   (51) Int. Cl.5: **G10L 5/06**

(21) Application number: **86104220.8**

(22) Date of filing: **27.03.86**

(54) **Speech recognition system and method using statistical models for words.**

(43) Date of publication of application:
**30.09.87 Bulletin 87/40**

(45) Publication of the grant of the patent:
**21.08.91 Bulletin 91/34**

(84) Designated Contracting States:
**CH DE FR GB IT LI NL SE**

(56) References cited:

**IBM TECHNICAL DISCLOSURE BULLETIN, vol. 18, no. 10, March 1976, pages 3479-3481, New York, US; R. BAKIS: "Spoken word spotting via centisecond acoustic states"**

**ICASSP '85, Tampa, Florida, US, 26th-29th March 1985, vol. 3, pages 1213-1216, IEEE, New York, US; H. BOURLARD et al.: "Speaker dependent connected speech recognition via phonemic Markov models"**

(73) Proprietor: **International Business Machines Corporation
Old Orchard Road
Armonk, N.Y. 10504(US)**

(72) Inventor: **Bahl, Lalit Rai
Elisha Purdy Road
Amawalk, N.Y. 10501(US)**
Inventor: **Desouza, Peter Vincent
1301 Whitehill Road
Yorktown Heights, N.Y. 10598(US)**
Inventor: **Mercer, Robert Leroy
669 Viewland Drive
Yorktown Heights, N.Y. 10598(US)**
Inventor: **Pichney, Michael Alan
118 Ralph Avenue
White Plains, N.Y. 10606(US)**

(74) Representative: **Barth, Carl Otto
IBM Corporation, Säumerstrasse 4
CH-8803 Rüschlikon(CH)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

The present invention is related to speech recognition, and more particularly to speech recognition systems using statistical Markov models for the words of a given vocabulary.

In current speech recognition systems, there are two commonly used techniques for acoustic modeling of words. The first technique uses word templates, and the matching process for word recognition is based on Dynamic Programming (DP) procedures. Samples for this technique are given in an article by F. Itakura, "Minimum Prediction Residual Principle Applied to Speech Recognition," IEEE Transactions on Acoustics, Speech, and Signal Processing, Vol. ASSP-23, 1975, pp. 67-72, and in U. S. Patent 4,181,821 to F. C. Pirz and L. R. Rabiner entitled "Multiple Template Speech Recognition System."

The other technique uses phone-based Markov model which are suited for probabilistic training and decoding algorithms. A description of this technique and related procedures is given in an article by F. Jelinek, "Continuous Speech Recognition by Statistical Methods," Proceedings of the IEEE, Vol. 64, 1976, pp. 532-556.

An article by R.Bakis "Spoken word spotting via centisecond acoustic states", IBM Technical Disclosure Bulletin, Vol.18, No.10, March 1976, pp.3479-3481 describes a technique which accomplishes the detection of specified words in continuous speech by modelling speech as a succession of 10 msec acoustic states. Such a technique was also described in IBM Research Report RC 5971, dated April 5, 1976 and entitled "Continuous speech recognition via centisecond acoustic states".

Three aspects of these models are of particular interest:

(1) Word Specificity - word templates are better for recognition because they are constructed from an actual sample of the word. Phonetics based models are derived from man-made phonetic baseforms and represent an idealized version of the word which actually may not occur;

(2) Trainability - Markov models are superior to templates because they can be trained, e.g. by the Forward-Backward algorithm (described in the Jelinek article). Word templates use distance measures such as the Itakura distance (described in the Itakura article), spectral distance, etc., which are not trained. One exception is the method used by Bakis which allows training of word templates (CF. Bakis report cited above).

(3) Computational Speed - Markov models which use discrete acoustic processor output alphabets are substantially faster in computational speed than Dynamic Programming matching (as used by Itakura) or continuous parameter word templates (as used by Bakis).

It is an object of the present invention to devise a method of acoustic modeling which has word specificity as with word templates but also offers the trainability that is available in discrete alphabet Markov models.

It is a further object to provide acoustic word models for speech recognition which are uncomplicated but allow high speed operation during the recognition processes.

These objects are achieved by a speech recognition system as defined in claim 1, and by a method of modelling words in a speech recognition system as defined in claim 10.

Advantages of the invention are that the generated word models are much more detailed than phone-based models while also being trainable; that the number of parameters depends on the size of the standard label alphabet and not on vocabulary size; and that probabilistic matching with these label-based models is computationally much faster than DP matching with word templates.

These advantages are notable with reference to the technique set forth in the above mentioned IBM Research Report by Raimo Bakis. In the Bakis article, a word is defined as a sequence of states with each state being considered different. Hence, if each word typically extended for sixty states and if the vocabulary were 500 words, the technique disclosed by Bakis would have to consider 300,000 different states. In accordance with the present invention, each state is identified as corresponding to one of on the order of 200 labels. The invention requires memory for the 200 labels which make up the words which can be stored simply as a sequence of numbers (each number representing a label) rather than for 300,000 states. In addition, less training data is required for the label-based model approach of the present invention. In the Bakis article approach, each word must be spoken to train for each speaker; with the invention, the speaker need utter only enough words to set values associated with 200 standard label models. It is also to be noted that the technique set forth in the Bakis article would treat two words --such as "boy" and "boys" -- independently. According to the invention, much of the training relating to the standard labels for the word "boy" would also be applied for the word "boys".

The advantage of the invention will become even more apparent by the following presentation of an embodiment which is described with reference to drawings.

## BRIEF DESCRIPTION OF THE DRAWINGS

FIG. 1 is a schematic representation of a label string obtained for a word from an acoustic processor.

FIG. 2 shows an elementary Markov model for one label.

FIG. 3 is a baseform for a word, generated by replacing each standard label of the string shown in FIG. 1 by an elementary Markov model.

FIG. 4 is a block diagram of the model generation and recognition procedure according to the invention.

FIG. 5 is a block representation of the process for initial generation of a standard label alphabet.

FIG. 6 is a block representation of the operation of the acoustic processor for deriving a personalized label string for a spoken word.

## DETAILED DESCRIPTION

### PRINCIPLES OF INVENTION LABELING OF SPEECH INPUT SIGNAL

A preliminary function for speech recognition and model generation in this system is the conversion of the speech input signal into a coded representation. This is done in a procedure that was described for example, in "Continuous Speech Recognition with Automatically Selected Acoustic Prototypes Obtained by Either Bootstrapping or Clustering" by A. Nadas et al, Proceedings ICASSP 1981, pp. 1153-1155. For this conversion procedure, fixed-length centisecond intervals of the acoustic input signal are subjected to a spectral analysis, and the resulting information is used to assign to the respective interval a "label", or "feneme", from a finite set (alphabet) of labels each representing a sound type, or more specifically, a spectral pattern for a characteristic 10-millisecond speech interval. The initial selection of the characteristic spectral patterns, i.e., the generation of the label set, is also described in the above mentioned article.

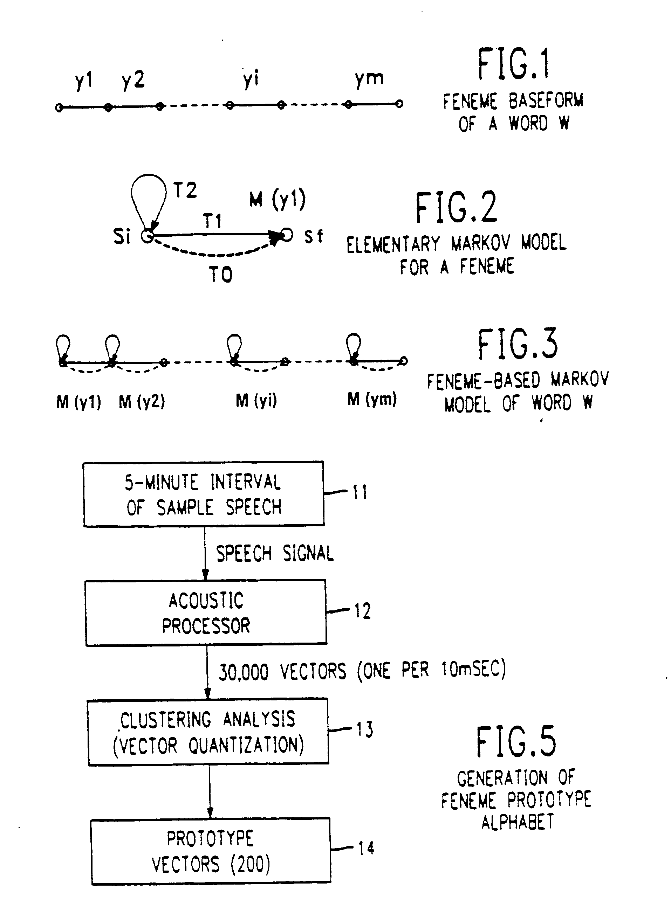

In accordance with the invention, there are different sets of labels. First, there is a finite alphabet of "standard" labels. The standard labels are generated when a first speaker utters into a conventional acoustic processor -- the processor applying conventional methods to perform clustering and labelling therefrom. the standard labels correspond to the first speaker's speech. When the first speaker utters each word in the vocabulary with the standard labels established, the acoustic processor converts each word into a sequence of standard labels. (See for example, TABLE 2 and FIG. 1.) The sequence of standard labels for each word is entered into storage. Second, there are sets of "personalized" labels. These "personalized" labels are generated by a subsequent speaker (the first speaker again or another) who provides speech input to the acoustic processor after the standard labels and sequences of standard labels are set.

The alphabet of standard labels and each set of personalized labels each preferably includes 200 labels although this number may differ. The standard labels and personalized labels are interrelated by means for probabilistic models associated with each standard label. Specifically, each standard label is represented by a model. having

(a) a plurality of states and transitions extending from a state to a state,

(b) a probability for each transition in a model, and

(c) a plurality of label output probabilities, each output probability at a given transition corresponding to the likelihood of the standard label model producing a particular personalized label at the given transition based on acoustic inputs from a subsequent "training" speaker.

The transition probabilities and label output probabilities are set during a training period during which known utterances are made by the training speaker. Techniques for training Markov models are known and are briefly discussed hereinafter.

An important feature of this labeling technique is that it can be done automatically on the basis of the acoustic signal and thus needs no phonetic interpretation.

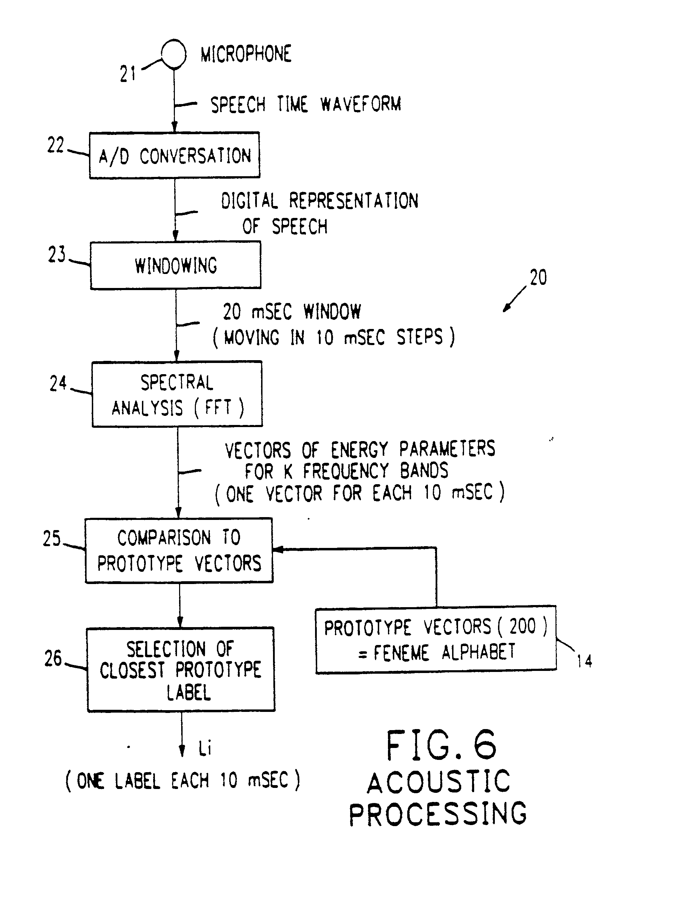

Some more details of the labeling technique will be presented in part in the "DETAILS OF THE EMBODIMENT" of this description with reference to FIGS. 5 and 6.

### GENERATION OF FENEME-BASED WORD MODELS

The present invention suggests a novel method of generating models of words which is simple and automatic and which leads to a more exact representation than that using phone-based models. For generating the model of a word, the word is first spoken once and a string of standard labels is obtained by the acoustic processor. (See FIG. 1 for the principle and Table 2 for samples). Then each of the standard labels is replaced by an elementary Markov model (FIG. 2) which represents an initial and a final state and some possible transitions between states. The result of concatenating the Markov models for the labels is

3

the model for the whole word.

This model can then be trained and used for speech recognition as is known for other Markov models from the literature, e.g. the above mentioned Jelinek article. The statistical model of each standard label is kept in storage as are, preferably, the word models formed thereof -- the models being stored preferably in the form of tables, TABLE 3.

In TABLE 3, it is noted that each standard label model M1 through MN has three possible transitions -- each transition having an arc probability associated therewith. In addition, each model M1 through MN has 200 output probabilities -- one for each personalized label -- at each transition. Each output probability indicates the likelihood that the standard label corresponding to model M1 produces a respective personalized label at a certain transition. The transition probabilities and output probabilities may vary from speaker to speaker and are set during the training period. If desired, the transition probabilities and output probabilities may be combined to form composite probabilities, each indicating the likelihood of producing a prescribed output with a prescribed transition occurring.

For a given word, the utterance thereof by a first speaker determines the order of labels and, thus, the order of models corresponding thereto. The first speaker utters all words in the vocabulary to establish the respective order of standard labels (and models) for each word. Thereafter, during training, a subsequent speaker utters known acoustic inputs -- preferably words in the vocabulary. From these utterances of known acoustic inputs, the transition probabilities and output probabilities for a given speaker are determined and stored to thereby "train" the model. In this regard, it should be realized that subsequent speakers need utter only so many acoustic inputs as is required to set the probabilities of the 200 models. That is, subsequent speakers need not utter all words in the vocabulary but, instead, need utter only so many acoustic inputs as necessary to train the 200 models.

Employing the label-based models is of further significance with regard to adding words to the vocabulary. To add a word to the vocabulary, all that is required is that the sequence of labels be determined -- as by the utterance of the new word. In that the label-based models (including probabilities for a given speaker) have previously been entered in storage, the only data required for the new word is the order of labels.

The advantage of this model is that it is particularly simple and can easily be generated. Some more details will be given in the following portion of this description.

DETAILS OF AN EMBODIMENT

MODEL GENERATION AND RECOGNITION PROCESS OVERVIEW

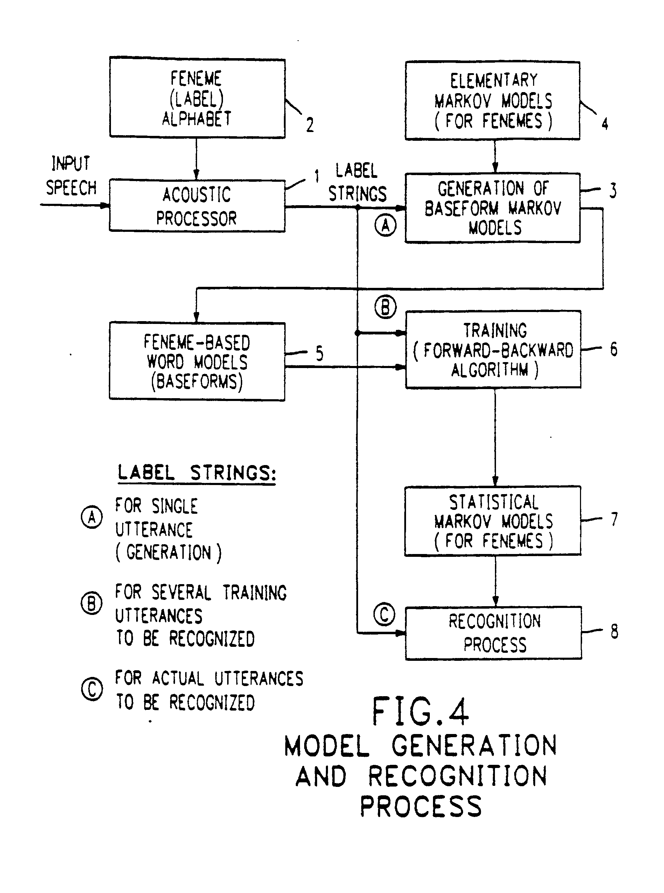

FIG. 4 is an overview of the speech recognition system, including model generation according to the invention and actual recognition.

Input speech is converted to label strings in the acoustic processor (1,) using a previously generated standard label alphabet (2), in an initial step (3), a Markov model is generated for each word, using the string of standard labels caused by the initial single utterance of each word and previously defined elementary feneme Markov models (4). The label-based Markov models are intermediately stored (5). Thereafter, in a training step (6), several utterances of words (or other acoustic input) by a subsequent speaker are matched against the label-based models to generate the statistics relating to the probability values for transitions and personalized label outputs for each model. In an actual recognition operation, strings of personalized labels resulting from utterances to be recognized are matched against the statistical label-based models of words, and identifiers for the word or words having the highest probability of producing the string of personalized labels are furnished at the output.

LABEL VOCABULARY GENERATION AND CONVERSION OF SPEECH TO LABEL STRINGS

The procedure for generating an alphabet of labels, and the actual conversion of speech into label strings will now be described with reference to FIGS. 5 and 6 (though descriptions are also available in the literature, e.g., the above mentioned Nadas et al, article).

For generating the standard labels which typically represent prototype vectors of sound types (or more specifically spectral parameters) of speech, a speaker talks for about five minutes to obtain a speech sample (box 11 in FIG. 5). In an acoustic processor (of which more details are discussed in connection with FIG. 6), 30,000 vectors of speech parameters are obtained (box 12), each for one 10 millisecond interval of the sample speech. These vectors are then processed in an analysis or vector quantization operation to group them in ca. 200 clusters, each cluster containing closely similar vectors (box 13). Such procedures are already disclosed in the literature, e.g., in an article by R. M. Gray, "Vector Quantization," IEEE ASSP Magazine, April 1984, pp. 4-29.

For each of the clusters, one prototype vector is selected, and the resulting 200 prototype vectors are then stored for later reference (box 14). Each such vector represents one acoustic element or label. A typical label alphabet is shown in TABLE 1.

FIG. 6 is a block diagram of the procedure for acoustic processing of speech to obtain label strings for utterances. The speech from a microphone (21) is converted to digital representation by an A/D converter (22). Windows of 20 msec duration are then extracted from the digital representation (23) and the window is moved in steps of 10 msec (to have some overlap). For each of the windows, a spectral analysis is made in a Fast Fourier Transform (FFT) to obtain for each interval representing 10 msec of speech a vector whose parameters are the energy values for a number of spectral bands (box 24 in FIG. 5). Each current vector thus obtained is compared to the set of prototype vectors (14) that were generated in a preliminary procedure described above. In this comparison step 25, the prototype vector which is closest to the current vector is determined, and the label or identifier for this prototype is then issued at the output (26). Thus, there will appear at the output one label every 10 msec, and the speech signal is available in coded form, the coding alphabet being the 200 feneme labels. In this regard, it should be noted that the invention need not be limited to labels generated at periodic intervals, it being contemplated only that each label corresponds to a respective time interval.

## GENERATION OF WORD MODELS USING LABEL STRINGS

For the generation of the word models, each word that is required in the vocabulary is uttered once and converted to a standard label string as explained above. A schematic representation of a label string of standard labels for one word is shown in FIG. 1, consisting of the sequence y1, y2,...ym which appeared at the output of the acoustic processor when the word is spoken. This string is now taken as the standard label baseform of the respective word.

To produce a basic model of the word which takes into account the variations in pronunciation of the word, each of the fenemes yi of the baseform string is replaced by an elementary Markov model M(yi) for that feneme.

The elementary Markov model can be of extremely simple form as shown in Fig. 2. It consists of an initial state Si, a final state Sf, a transition T1 leading from state Si to state Sf and representing one personalized label output, a transition T2 leaving and returning to, the initial state Si, also representing one personalized label output, and a null transition T0 from the initial to the final state, to which no personalized label output is assigned. This elementary model accounts for (a) a single appearance of the personalized label by taking only transition T1, (b) several appearances of a personalized label by taking transition T2 several times; and (c) the representation of a missing personalized label by taking the null transition T0.

The same elementary model as shown in FIG. 2 can be selected for all 200 different standard labels. Of course, more complicated elementary models can be used, and different models can be assigned to the various standard labels but for the present embodiment the model of FIG. 2 is used for all standard labels.

The complete baseform Markov model of the whole word whose label-based baseform is presented in FIG. 1 is illustrated in FIG. 3. It consists of a simple concatenation of the elementary models M(yi) for all standard labels of the word, the final state of each elementary model being joined with the initial state of the following elementary model. Thus, the complete baseform Markov model of a word that caused a string of m standard labels will comprises m elementary Markov models. The typical number of standard labels per word (and thus the number of states per word model) is about 30 to 80. Labels for four words are illustrated in TABLE 2. The word "thanks", for example, begin with the label PX5 and ends with PX2.

To generate a baseform Markov model for a word means to define the different states and transitions and their interrelation for the respective word. To be useful for speech recognition, the baseform model for the word must be made a statistical model by training it with several utterances i.e., by accumulating statistics for each transition in the model.

Since the same elementary model appears in several different words, it is not necessary to have several utterances of word in order to train the models.

Such training can be made by the so called "Forward-Backward algorithm," which has been described in the literature, e.g., in the already mentioned paper by Jelinek.

As a result of the training, a probability value is assigned to each transition in the model. For example, for one specific state there may be a probability value of 0.5 for T1, 0.4 for T2, and 0.1 for T0. Furthermore, for each of the non-null transitions T1 and T2, there is given a list of probabilities indicating for each of the 200 personalized labels what the probability of its appearance is when the respective transition is taken. The whole statistical model of a word takes the form of a list or table as shown in TABLE 3. Each elementary model or standard label is represented by one section in the table, and each transition corresponds to a line or vector whose elements are the probabilities of the individual personalized labels (and in addition the overall probability that the respective transition is taken).

For actual storage of all word models, the following is sufficient: one vector is stored for each word, the vector components being the identifiers of the elementary Markov models of which the word consists; and one statistical Markov model including the probability values stored for each of the 200 standard labels of the alphabet. Thus, the statistical word model shown in TABLE 3 need not actually be stored as such in memory; it can be stored in a distributed form with data being combined as needed.

RECOGNITION PROCESS

For actual speech recognition, the utterances are converted to strings of personalized labels as was explained in the initial sections. These personalized label strings are then matched against each word model to obtain the probability that a string of personalized labels was caused by utterance of the word represented by that model. Specifically, matching is performed based on match scores for respective words, wherein each match score represents a "forward probability" as discussed in the above-identified Jelinek article. The recognition process employing label-based models is analogous to known processes which employ phone-based models. The word or words with the highest probability is (are) selected as output.

CONCLUSION

CHANGING OF LABEL ALPHABET

It should be noted that the standard label alphabet used for initial word model generation and personalized label sets used for training and for recognition may be, but typically are not, all identical. However, although the probability values associated with labels generated during recognition may differ somewhat from personalized labels generated during training, the actual recognition result will generally be correct. This is possible because of the adaptive nature of the Markov models.

It should, however, also be noted that inordinately large changes in respective training and recognition alphabets may affect accuracy. Also, a subsequent speaker whose speech is vastly different from the first speaker will train the models with probabilities that may result in limits on accuracy.

The advantages of the label-based Markov models introduced by the present invention can be summarized as follows:

(a) these models are an improvement on phone-based models because they represent the word at a much more detailed level;

(b) unlike word templates using DP matching, label-based word models are trainable using the Forward-Backward algorithm;

(c) the number of parameters depends on the size of the feneme alphabet and not on vocabulary size -- storage requirements growing slowly with an increase in vocabulary size;

(d) the recognition procedure using label-based models is computationally much faster than Dynamic Programming matching and the usage of continuous parameter word templates; and

(e) the modelling of words is done automatically.

In addition to those variations and modifications to the disclosed apparatus which have been suggested, many other variations and modifications will be apparent to those skilled in the art.

For example, although shown preferably as a single acoustic processor, the processing functions may be distributed over a plurality of processors including, for example: a first processor initially determining the alphabet of standard labels; a second processor for producing a sequence of standard labels for each word initially spoken once; a third processor for selecting an alphabet of personalized labels; and a fourth processor for converting training inputs or words into a string of personalized labels.

## TABLE 1

THE TWO LETTERS ROUGHLY REPRESENT THE SOUND OF THE ELEMENT.

TWO DIGITS ARE ASSOCIATED WITH VOWELS:

      FIRST:   STRESS OF SOUND

      SECOND:   CURRENT IDENTIFICATION NUMBER

ONE DIGIT ONLY IS ASSOCIATED WITH CONSONANTS:

SINGLE DIGIT:   CURRENT IDENTIFICATION NUMBER

| | | | | |
|---|---|---|---|---|
| 001 AA11 | 029 BX2- | 057 EH02 | 148 TX5- | 176 XX11 |
| 002 AA12 | 030 BX3- | 058 EH11 | 149 TX6- | 177 XX12 |
| 003 AA13 | 031 BX4- | 059 EH12 | 150 UH01 | 178 XX13 |
| 004 AA14 | 032 BX5- | 060 EH13 | 151 UH02 | 179 XX14 |
| 005 AA15 | 033 BX6- | 061 EH14 | 152 UH11 | 180 XX15 |
| 006 AE11 | 034 BX7- | 062 EH15 | 153 UH12 | 181 XX16 |
| 007 AE12 | 035 BX8- | 126 RX1- | 154 UH13 | 182 XX17 |
| 008 AE13 | 036 BX9- | 127 SH1- | 155 UH14 | 183 XX18 |
| 009 AE14 | 037 DH1- | 128 SH2- | 156 UU11 | 184 XX19 |
| 010 AE15 | 038 DH2- | 129 SX1- | 157 UU12 | 185 XX2- |
| 011 AW11 | 039 DQ1- | 130 SX2- | 158 UXG1 | 186 XX20 |
| 012 AW12 | 040 DQ2- | 131 SX3- | 159 UXG2 | 187 XX21 |
| 013 AW13 | 041 DQ3- | 132 SX4- | 160 UX11 | 188 XX22 |
| 014 AX11 | 042 DQ4- | 133 SX5- | 161 UX12 | 189 XX23 |
| 015 AX12 | 043 DX1- | 134 SX6- | 162 UX13 | 190 XX24 |
| 016 AX13 | 044 DX2- | 135 SX7- | 163 VX1- | 191 XX3- |
| 017 AX14 | 045 EE01 | 136 TH1- | 164 VX2- | 192 XX4- |
| 018 AX15 | 046 EE02 | 137 TH2- | 165 VX3- | 193 XX5- |
| 019 AX16 | 047 EE11 | 138 TH3- | 166 VX4- | 194 XX6- |
| 020 AX17 | 048 EE12 | 139 TH4- | 167 WX1- | 195 XX7- |
| 021 BQ1- | 049 EE13 | 140 TH5- | 168 WX2- | 196 XX8- |
| 022 BQ2- | 050 EE14 | 141 TQ1- | 169 WX3- | 197 XX9- |
| 023 BQ3- | 051 EE15 | 142 TQ2- | 170 WX4- | 198 ZX1- |
| 024 BQ4- | 052 EE16 | 143 TX3- | 171 WX5- | 199 ZX2- |
| 025 BX1- | 053 EE17 | 144 TX1- | 172 WX6- | 200 ZX3- |
| 026 BX10 | 054 EE18 | 145 TX2- | 173 WX7- | |
| 027 BX11 | 055 EE19 | 146 TX3- | 174 XX1- | |
| 028 BX12 | 056 EH01 | 147 TX4- | 175 XX10 | |

TABLE 2

SAMPLE LABEL STRINGS FOR FOUR WORDS
(THANKS - FOR - YOUR - LETTER)

'thanks'
```
PX5_ TX4_ KX5_ KX2_ TX4_ KX5_ KX2_ KX2_ TH1_ DQ3_
KQ1_ UX13 AX17 EH12 EH12 EH12 EH12 EH12 EH12 EH12
EH12 EH12 EH12 EH15 EH15 EH15 EH15 EH15 AE12 AE12
AE12 IXG1 EI12 EI12 EI12 EI12 BQ2_ JX1_ NX6_ NX1_
NG2_ GX5_ NG2_ GX5_ DX1_ BX10 BX3_ GX4_ BX10 PX5_
PX4_ TH2_ PX4_ HX1_ SX4_ SX5_ SX5_ SX5_ SX5_ SX5_
SX2_ SX5_ SX2_ SX5_ SX5_ SX5_ SX5_ SX4_ SX4_ SX2_
TH1_ TH2_ DQ3_ KX4_ TX6_ XX12 PX2_
```

'for'
```
PX5_ TX4_ BX8_ KX2_ DQ3_ TH2_ KX2_ TH2_ TH2_ TH2_
FX2_ TH2_ HX1_ KQ1_ VX4_ VX4_ WX1_ WX4_ WX4_ LX1_
WX4_ LX1_ LX1_ LX1_ LX1_ LX1_ LX1_ LX1_ LX1_ LX1_
LX1_ LX1_ LX1_ LX1_ LX1_ LX1_ LX1_ AW13 AW13 AW13
AW13 AW13 AW13 AW13 AW13 UH12 AW11 AW11 AW11 AW11
AW11 AW11 AW11 ER14 ER14 ER14 RX1_ RX1_ RX1_ RX1_
RX1_ MX4_ MX4_ MX4_ MX4_ DQ4_ BX7_ DQ1_ BX7_ BX7_
TX5_ XX14 BX9_ XX3_ XX7_
```

'your'
```
GX4_ GX1_ GX1_ GX1_ EE12 JX1_ EE11 EE01 IX02 IX01
IX01 GQ1_ UX12 UX12 UX12 UH14 UH14 UH12 AW11 AW13
AW13 AW13 AW13 AW13 AW13 AW13 AW13 AW13 AW13 AW11
AW11 AW11 AW11 AW11 AW11 AW11 AW11 AW11 ER14 ER14
ER14 ER14 ER14 ER14 ER14 ER14 RX1_ RX1_ RX1_ MX4_
MX4_ MX4_ MX4_ MX4_ DQ1_ VX2_ BX7_ DQ1_ BX7_ TX5_
XX14 XX1_
```

'letter'
```
BX3_ BX3_ BX8_ BX2_ NX5_ WX2_ WX7_ WX6_ WX6_ WX6_
WX6_ WX5_ WX4_ WX3_ WX3_ OU11 UH14 AX15 AX15 AX14
AX14 EH12 EH12 EH12 EH12 EH12 EH12 EH12 EH12 EH12
AE14 EH02 UH02 EH02 SH2_ EE02 TQ1_ IX05 TQ1_ IXG1
PQ1_ ER02 ER01 ER13 ER13 ER13 ER13 ER11 ER11 ER13
ER13 ER13 ER13 ER13 RX1_ RX1_ RX1_ ER02 RX1_ ER02
MX4_ MX4_ DQ1_ DQ1_ DQ1_ DQ1_ DQ1_ DQ1_ DQ1_ DQ1_
DQ1_ DQ1_ DQ1_ BX7_ TX5_ TX5_ TX5_ TX5_ XX2_ XX14
TX4_
```

### TABLE 3
### STATISTICAL MARKOV MODEL OF WORD
### (FENEME-BASED MODEL)

| FENEME MODEL | STATE | TRANS- ITION | ARC PROB. | OUTPUT PROBABILITIES | | |
|---|---|---|---|---|---|---|
| | | | | L001 | L002 ..... | L200 |
| M1 | S1 | T11 | 0.5 | 0.03 | 0.00 | 0.13 |
| | | T12 | 0.4 | 0.02 | 0.01 | 0.00 |
| | | T10 | 0.1 | – | – | – |
| M2 | S2 | T21 | 0.73 | . | . | . |
| | | T22 | 0.22 | . | . | . |
| | | T20 | 0.05 | – | – | – |
| M3 | S3 | T31 | 0.5 | . | . | . |
| | | T32 | 0.45 | . | . | . |
| | | T30 | 0.05 | — | — | — |
| . | . | . | | | | |
| . | . | . | | | | |
| . | . | . | | | | |
| MN | SN | TN1 | 0.6 | . | . | . |
| | | TN2 | 0.3 | . | . | . |
| | | TN0 | 0.1 | – | – | – |

## Claims

1. A speech recognition system comprising:

means for generating an alphabet of standard labels in response to a first speech input, each standard label representing a sound type corresponding to a given interval of time;

means for producing a respective sequence of standard labels from the alphabet in response to the uttering of each word from a vocabulary; and

means for forming a respective probabilistic model for each standard label, each model including
- a plurality of states,
- at least one transition probability for each transition from a state to a state, and
- a transition probability for each transition;
characterized by

means for selecting a set of personalized labels in response to a second speech input, said second speech input occurring after said first speech input, each personalized label representing a sound type corresponding to an interval of time; and

each model including for at least one transition, a plurality of output probabilities wherein each output probability at a given transition in the model of a given standard label represents the likelihood of a respective personalized label being produced at the given transition.

2. A system as in claim 1 further comprising:

   means for setting the output probabilities and transition probabilities of each standard label model in response to a training speaker speaking training utterances.

3. A system as in claim 2 wherein all the transition probabilities and all the output probabilities for each transition in each respective probabilistic model are set in response to the spoken input of the training speaker, the system further comprising:

   means for converting spoken input into a string of personalized labels from the set thereof, wherein each personalized label has a corresponding output probability at each of at least some of the transitions in each probabilistic model; and

   means for determining which words represented by concatenated probabilistic models have the greatest probability of having produced the string of personalized labels.

4. A system as in claim 3 wherein said generating producing, selecting, and converting means constitute a single acoustic processor.

5. A system as in claim 3 including means for storing, for each word in the vocabulary, the sequence of standard labels corresponding thereto.

6. A system as in claim 5 further comprising means for storing, for each standard label, the respective transition probabilities and personalized label output probabilities associated therewith; and

   means for combining, for each word in the vocabulary, the stored model probabilities associated with each successive standard label in the respective concatenation which forms the respective word, to determine the likelihood that said given word produced the string of personalized labels.

7. A system as in claim 1 further comprising:

   means for concatenating models of standard labels to form a label-based Markov word model for each sequence of standard labels representing a word.

8. A system as in claim 7 further comprising:

   means for matching vocabulary words formed as Markov word models with an input string of personalized labels generated by an acoustic processor in response to speech inputs to be recognized, said matching means determining the probability of each of at least some of the words in the vocabulary producing the input string.

9. A system as in claim 1 wherein each standard label model has
   (a) two states,
   (b) a first transition between the two states whereat each personalized label has an output probability associated therewith,
   (c) a second transition extending from the first state back to itself whereat each personalized label model has an output probability associated therewith, and
   (d) a null transition between the two states whereat no output occurs.

10. A method of modelling words in a speech recognition system comprising the steps of:

    producing, in an acoustic processor, for each word in a vocabulary a sequence of concatenated standard labels in response to a speaker uttering the respective word, wherein each standard label corresponds to a time interval of speech and each label in the sequence is from an alphabet of standard labels;

    storing, for each word, the produced sequence corresponding thereto;

representing each standard label by a probabilistic model, the model for each standard label having associated therewith

- a plurality of states,
- at least one transition, and
- a transition probability for each transition;

characterized by the steps of

subsequently generating a set of personalized labels in response to a training speaker uttering preselected acoustic inputs into the acoustic processor, the personalized labels of the set representing the sound types corresponding to the training speaker; and

associating in the model for each standard label, with each transition an output probability for each of a plurality of the personalized labels, each output probability at a given transition corresponding to the likelihood that the respective personalized label is produced at said given transition.

11. A method as in claim 10 comprising the further step of:

setting the label output probabilities and transition probabilities of each given label model in response to the training speaker speaking training utterances.

12. A method as in claim 10 comprising the further steps of:

determining the sequence of standard labels for a word to be added to the vocabulary by speaking the word once to an acoustic processor and storing the sequence therefor; and

replacing each standard label in the added word with the probabilistic model corresponding thereto thereby forming a word model for the added word comprised of the concatenated models for the standard labels, the probabilities of each label-based standard label model being applicable to the word model for the added word.

## Revendications

1. Dispositif de reconnaissance de la parole, comprenant :
   des moyens de création d'un alphabet d'étiquettes normales en réponse à une première entrée de parole, chaque étiquette normale représentant un type de son correspondant à un intervalle de temps donné ;
   des moyens de production d'une séquence respective d'étiquettes normales prises dans l'alphabet, en réponse à l'émission de chaque mot d'un vocabulaire ; et
   des moyens de formation d'un modèle probabiliste respectif pour chaque étiquette normale, chaque modèle comprenant
   - une pluralité d'états,
   - une probabilité de transition pour chaque transition d'un état à un autre, et
   - une probabilité de transition pour chaque transition ;
   caractérisé par
   des moyens de sélection d'un ensemble d'étiquettes personnalisées en réponse à une deuxième entrée de parole, ladite deuxième entrée de parole se produisant après ladite première entrée de parole, chaque étiquette personnalisée représentant un type de son correspondant à un intervalle de temps ; et
   chaque modèle comprenant, pour au moins une transition, une pluralité de probabilités de sortie, chaque probabilité de sortie à une transition considérée dans le modèle d'une étiquette normale considérée représentant la probabilité de production d'une étiquette personnalisée respective à la transition considérée.

2. Dispositif suivant la revendication 1, comprenant en outre :
   des moyens d'établissement des probabilités de sortie et des probabilités de transition de chaque modèle d'étiquette normale en réponse à des émissions d'apprentissage prononcées par un locuteur d'apprentissage.

3. Dispositif suivant la revendication 2, dans lequel toutes les probabilités de transition et toutes les probabilités de sortie pour chaque transition dans chaque modèle probabiliste respectif sont déterminées en réponse à l'entrée de parole du locuteur d'apprentissage, le dispositif comprenant en outre :

des moyens de conversion de l'entrée de parole en une chaîne d'étiquettes personnalisées, à partir de leur ensemble, chaque étiquette personnalisée ayant une probabilité de sortie correspondante à chacune d'au moins certaines des transitions dans chaque modèle probabiliste ; et

des moyens de détermination des mots, représentés par des modèles probabilistes reliés en chaîne, qui ont la plus grande probabilité d'avoir produit la chaîne d'étiquettes personnalisées.

4. Dispositif suivant la revendication 3, dans lequel lesdits moyens de création, de production, de sélection et de conversion constituent un processeur acoustique unique.

5. Dispositif suivant la revendication 3, comprenant des moyens de stockage, pour chaque mot du vocabulaire, de la séquence d'étiquettes normales correspondant à ce mot.

6. Dispositif suivant la revendication 5, comprenant en outre des moyens de stockage, pour chaque étiquette normale, des probabilités de transition respectives et des probabilités de sortie d'étiquette personnalisée associées à celle-ci ; et

des moyens de combinaison, pour chaque mot du vocabulaire, des probabilités de modèle stockées associées à chaque étiquette normale successive dans la concaténation respective qui forme le mot respectif, pour déterminer la probabilité que ledit mot considéré a produit la chaîne d'étiquettes personnalisées.

7. Dispositif suivant la revendication 1, comprenant en outre :

des moyens de concaténation des modèles d'étiquettes normales de manière à former un modèle de mot de Markov à base d'étiquettes pour chaque séquence d' étiquettes normales représentant un mot .

8. Dispositif suivant la revendication 7, comprenant en outre :

des moyens de comparaison des mots de vocabulaire, sous la forme de modèles de mot de Markov, avec une chaîne d'entrée d'étiquettes personnalisées engendrée par un processeur acoustique en réponse à des entrées de parole à reconnaître, lesdits moyens de comparaison déterminant la probabilité que chacun d'au moins certains des mots du vocabulaire ait produit la chaîne d'entrée.

9. Dispositif suivant la revendication 1, dans laquelle chaque modèle d'étiquette normale possède
(a) deux états ,
(b) une première transition entre les deux états, à laquelle chaque étiquette personnalisée possède une probabilité de sortie qui lui est associée,
(c) une deuxième transition s'étendant à partir du premier état et faisant retour sur elle-même, à laquelle chaque modèle d'étiquette personnalisée possède une probabilité de sortie qui lui est associée, et
(d) une transition nulle entre les deux états, à laquelle aucune sortie ne se produit.

10. Procédé de modélisation de mots dans un système de reconnaissance de la parole, comprenant les opérations de :

production, dans un processeur acoustique,pour chaque mot d'un vocabulaire, d'une séquence d'étiquettes normales reliées en chaîne en réponse à l'émission du mot respectif par un locuteur, chaque étiquette normale correspondant à un intervalle de temps de la parole et chaque étiquette dans la séquence provenant d'un alphabet d'étiquettes normales ;

mémorisation, pour chaque mot, de la séquence produite correspondant à ce mot;

représentation de chaque étiquette normale par un modèle probabiliste, le modèle pour chaque étiquette normale comportant, associés à ce modèle,
- une pluralité d'états,
- au moins une transition, et
- une probabilité de transition pour chaque transition ;
caractérisé par les opérations de

ensuite, production d'un ensemble d'étiquettes personnalisées en réponse à l'émission, par un locuteur d'apprentissage, d'entrées acoustiques prédéterminées dans le processeur acoustique. les étiquettes personnalisées de l'ensemble représentant les types de son correspondant au locuteur d'apprentissage ; et

association dans le modèle pour chaque étiquette normale, à chaque transition, d'une probabilité de sortie pour chacune d'une pluralité des étiquettes personnalisées, chaque probabilité de sortie à une transition considérée correspondant à la probabilité que l'étiquette personnalisée respective soit produite à ladite transition considérée.

11. Procédé suivant la revendication 10, comprenant en outre l'opération de :

établissement des probabilités de sortie d'étiquette et des probabilités de transition de chaque modèle d'étiquette donné, en réponse à des émissions d'apprentissage prononcées par le locuteur d'apprentissage.

12. Procédé suivant la revendication 10, comprenant en outre les opérations de :

détermination de la séquence d'étiquettes normales pour un mot à ajouter au vocabulaire, par prononciation du mot une fois dans un processeur acoustique et mémorisation de la séquence pour ce mot ; et

remplacement de chaque étiquette normale, dans le mot ajouté, par le modèle probabiliste correspondant à cette étiquette, de manière à former,pour le mot ajouté, un modèle de mot composé des modèles en concaténation des étiquettes normales, les probabilités de chaque modèle d'étiquette normale à base d'étiquettes étant applicables au modèle de mot pour le mot ajouté.

## Patentansprüche

1. System für Spracherkennung mit,

Mitteln zum Erzeugen eines Alphabets von Standardmarken in Antwort auf eine erste Spracheingabe, wobei jede Standardmarke eine Lautart repräsentiert, die einem gegebenen Zeitintervall entspricht,

Mitteln zum Hervorbringen einer entsprechenden Folge von Standardmarken aus dem Alphabet in Antwort auf die Aussprache jedes Wortes aus einem Vokabular und

Mitteln zum Bilden eines entsprechenden probabilistischen Modells für jede Standardmarke, wobei jedes Modell aufweist:
- eine Mehrzahl von Zuständen,
- zumindest eine Übergangswahrscheinlichkeit für jeden Übergang von einem Zustand zu einem Zustand und
- eine Übergangswahrscheinlichkeit für jeden Übergang,
gekennzeichnet durch

Mittel zum Auswählen eines Satzes personifizierter Marken in Antwort auf eine zweite Spracheingabe, wobei die zweite Spracheingabe nach der ersten Spracheingabe stattfindet, jede personifizierte Marke eine Lautart repräsentiert, die einem Zeitintervall entspricht und

jedes Modell für zumindest einen Übergang eine Mehrzahl von Ausgangswahrscheinlichkeiten aufweist, worin jede Ausgangswahrscheinlichkeit bei einem gegebenen Übergang in dem Modell einer gegebenen Standardmarke die Wahrscheinlichkeit einer entsprechenden personifizierten Marke repräsentiert, die bei dem gegebenen Übergang erzeugt wird.

2. System nach Anspruch 1, welches ferner aufweist:

Mittel zum Setzen der Ausgangswahrscheinlichkeiten und Übergangswahrscheinlichkeiten jedes Standardmarkenmodells in Antwort auf einen Übungssprecher, der Ausspracheübungen durchführt.

3. System nach Anspruch 2, bei welchem alle Übergangswahrscheinlichkeiten und alle Ausgangswahrscheinlichkeiten für jeden Übergang in jedem entsprechenden probabilistischen Modell gemäss der gesprochenen Eingabe des Übungssprechers gesetzt sind, wobei das System ferner aufweist:

Mittel zum Umwandeln einer gesprochenen Eingabe in eine Kette personifizierter Marken aus deren Satz, bei welchem jede personifizierte Marke eine entsprechende Ausgangswahrscheinlichkeit bei jedem von zumindest einigen der Übergänge in jedem probabilistischen Modell aufweist und

Mittel zum Bestimmen, welche Worte, die durch verkettete probabilistische Modelle repräsentiert sind, die grösste Wahrscheinlichkeit dafür aufweisen, die Kette personifizierter Marken erzeugt zu haben.

4.  System nach Anspruch 3, bei welchem die Mittel zum Erzeugen, Hervorbringen, Auswählen und Umwandeln einen einzigen akustischen Prozessor bilden.

5.  System nach Anspruch 3, welches Mittel aufweist, um für jedes Wort in dem Vokabular die Folge von Standardmarken zu speichern, welche diesem entsprechen.

6.  System nach Anspruch 5, welches ferner aufweist:

Mittel zum Speichern der entsprechenden Übergangswahrscheinlichkeiten und der diesen zugeordneten personifizierten Markenausgangswahrscheinlichkeiten für jede Standardmarke und Mittel zum Kombinieren der gespeicherten Modellwahrscheinlichkeiten, die jeder aufeinanderfolgenden Standardmarke in der entsprechenden Verkettung zugeordnet sind, welche das entsprechende Wort bildet, für jedes Wort in dem Vokabular, um die Wahrscheinlichkeit zu bestimmen, daß das gegebene Wort die Kette personifizierter Marken erzeugt hat.

7.  System nach Anspruch 1, welches ferner aufweist:

Mittel zum Verketten von Modellen von Standardmarken, um ein Markow-Wortmodell auf Markenbasis für jede Folge ein Wort repräsentierender Standardmarken zu bilden.

8.  System nach Anspruch 7, welches ferner aufweist:

Mittel zum Anpassen von Worten eines Vokabulars, die als Markow-Wortmodelle mit einer Eingabekette personifizierter Marken gebildet sind, die durch einen akustischen Prozessor entsprechend zu erkennender Spracheingaben erzeugt werden, wobei Mittel zum Anpassen die Wahrscheinlichkeit jedes zumindest einiger der Worte in dem Vokabular bestimmen, welche die Eingabekette erzeugen.

9.  System nach Anspruch 1, bei welchem jedes Standardmarkenmodell aufweist:
    a) zwei Zustände,
    b) einen ersten Übergang zwischen den zwei Zuständen, wobei jede personifizierte Marke eine dieser zugeordneten Ausgangswahrscheinlichkeiten aufweist,
    c) einen zweiten Übergang, der von dem ersten Zustand zurück zu sich selbst verläuft, wobei jedes personifizierte Markenmodell eine diesem zugeordnete Ausgangswahrscheinlichkeit aufweist und
    d) einen Null-Übergang zwischen den zwei Zuständen, wobei keine Ausgabe stattfindet.

10. Verfahren zum Modellieren von Worten in einem System für Spracherkennung, welches die folgenden Schritte umfasst:

Erzeugen einer Folge verketteter Standardmarken in Antwort auf einen, das entsprechende Wort aussprechenden, Sprecher, in welcher jede Standardmarke einem Sprachzeitintervall entspricht und jede Marke in der Folge aus einem Alphabet von Standardmarken stammt, in einem akustischen Prozessor für jedes Wort in einem Vokabular,

Speichern der erzeugten Folge für jedes Wort, die diesem entspricht,

Ersetzen jeder Standardmarke durch ein probabilistisches Modell, wobei dem Modell für jede Standardmarke zugeordnet sind:
    - eine Mehrzahl von Zuständen,
    - zumindest einen Übergang und
    - eine Übergangswahrscheinlichkeit für jeden Übergang,
gekennzeichnet durch die folgenden Schritte:

nachfolgendes Erzeugen eines Satzes personifizierter Marken in Antwort auf einen Übungssprecher, der vorausgewählte akustische Eingaben in den akustischen Prozessor spricht, wobei die personifizierten Marken des Satzes die Lautarten des Übungssprechers repräsentieren und für jede aus einer Mehrzahl der personifizierten Marken Zuordnen einer Ausgabewahrscheinlichkeit jedem Übergang in dem Modell für jede Standardmarke, wobei jede Ausgabewahrscheinlichkeit bei einem gegebenen Übergang der Wahrscheinlichkeit entspricht, daß die entsprechende personifizierte Marke bei dem gegebenen Übergang erzeugt wird.

11. Verfahren nach Anspruch 10, welches den folgenden weiteren Schritt umfasst:

Setzen der Markenausgabewahrscheinlichkeiten und Übergangswahrscheinlichkeiten jedes gegebenen Markenmodells in Antwort auf den Übungssprecher, der Ausspracheübungen durchführt.

12. Verfahren nach Anspruch 10, welches die folgenden weiteren Schritte umfasst:

Bestimmen der Folge von Standardmarken für ein Wort, welches dem Vokabular durch einmaliges Sprechen des Wortes an einem akustischen Prozessor hinzugefügt werden soll und Speichern der Folge dafür: und

Ersetzen jeder Standardmarke in dem hinzugefügten Wort durch das diesem entsprechende probabilistische Modell, wodurch ein Wortmodell für das hinzugefügte Wort gebildet wird, das aus den verketteten Modellen für die Standardmarken besteht, wobei die Wahrscheinlichkeiten jedes Standardmarkenmodells auf Markenbasis auf ein Wortmodell für das hinzugefügte Wort anwendbar sind.

y1  y2        yi        ym

# FIG.1
FENEME BASEFORM
OF A WORD W

# FIG.2
ELEMENTARY MARKOV MODEL
FOR A FENEME

T2   M (y1)
T1
Si          Sf
TO

# FIG.3
FENEME-BASED MARKOV
MODEL OF WORD W

M (y1)  M (y2)    M (yi)    M (ym)

```
┌─────────────────────┐
│  5-MINUTE INTERVAL  │──── 11
│  OF SAMPLE SPEECH   │
└─────────────────────┘
         │ SPEECH SIGNAL
         ▼
┌─────────────────────┐
│     ACOUSTIC        │──── 12
│     PROCESSOR       │
└─────────────────────┘
         │ 30,000 VECTORS (ONE PER 10mSEC)
         ▼
┌─────────────────────┐
│ CLUSTERING ANALYSIS │──── 13
│(VECTOR QUANTIZATION)│
└─────────────────────┘
         │
         ▼
┌─────────────────────┐
│     PROTOTYPE       │──── 14
│   VECTORS (200)     │
└─────────────────────┘
```

# FIG.5
GENERATION OF
FENEME PROTOTYPE
ALPHABET

FIG.4
MODEL GENERATION
AND RECOGNITION
PROCESS

FIG. 6
ACOUSTIC
PROCESSING